(19) **Europäisches Patentamt**
**European Patent Office**
**Office européen des brevets**

(11) **EP 1 870 837 B1**

(12) **EUROPEAN PATENT SPECIFICATION**

(45) Date of publication and mention
of the grant of the patent:
**11.08.2010 Bulletin 2010/32**

(51) Int Cl.:
**G06K 9/52** (2006.01)      **G06F 17/30** (2006.01)

(21) Application number: **07110248.7**

(22) Date of filing: **14.06.2007**

(54) **Method and device to determine a descriptor for a signal representing a multimedia item, device for retrieving items in a database, device for classification of multimedia items in a database**

Verfahren und Vorrichtung zur Bestimmung eines Deskriptors für ein Signal, das ein Multimedia-Element darstellt, Vorrichtung zur Gewinnung von Elementen in einer Datenbank, Vorrichtung zur Klassifizierung von Multimedia-Elementen in einer Datenbank

Procédé et dispositif de détermination d'un descripteur de signal représentant un article multimédia, dispositif de récupération d'articles dans une base de données, dispositif de classification d'articles multimédia dans une base de données

(84) Designated Contracting States:
**DE FR GB**

(30) Priority: **22.06.2006 EP 06300714**

(43) Date of publication of application:
**26.12.2007 Bulletin 2007/52**

(73) Proprietor: **Thomson Licensing**
**92130 Issy-les-Moulineaux (FR)**

(72) Inventors:
• **Stauder, Jürgen**
**92648 Boulogne Cedex (FR)**
• **Maria-Alphonse, Jean-Emile**
**92648 Boulogne cedex (FR)**
• **Sirot, Joel**
**92648 Boulogne Cedex (FR)**

(74) Representative: **Le Dantec, Claude**
**Technicolor**
**1-5 rue Jeanne d'Arc**
**92130 Issy-les-Moulineaux (FR)**

(56) References cited:
• **DATABASE INSPEC [Online] THE INSTITUTION OF ELECTRICAL ENGINEERS, STEVENAGE, GB; January 2006 (2006-01), JIANMIN JIANG ET AL: "Robust-to-rotation texture descriptor for image retrieval in wavelets domain" XP002409019 Database accession no. 8892377 & Journal of Electronic Imaging SPIE-Int. Soc. Opt. Eng USA, vol. 15, no. 1, January 2006 (2006-01), pages 13013-1, ISSN: 1017-9909**
• **DATABASE INSPEC [Online] THE INSTITUTION OF ELECTRICAL ENGINEERS, STEVENAGE, GB; 21 July 2005 (2005-07-21), KACHOUIE N N ET AL: "Optimized multichannel filter bank with flat frequency response for texture segmentation" XP002409020 Database accession no. 8795044 & EURASIP Journal on Applied Signal Processing Hindawi USA, vol. 2005, no. 12, 21 July 2005 (2005-07-21), pages 1834-1844, ISSN: 1110-8657**
• **[Online] October 2004 (2004-10), XP002408940 Retrieved from the Internet: URL:http://www.chiariglione.org/mpeg/stand ards/mpeg-7/mpeg-7.htm#E11E3> [retrieved on 2006-11-24]**
• **DATABASE INSPEC [Online] THE INSTITUTION OF ELECTRICAL ENGINEERS, STEVENAGE, GB; July 2004 (2004-07), LAKSHMANAN V: "A separable filter for directional smoothing" XP002409021 Database accession no. 8121733 & IEEE Geoscience and Remote Sensing Letters IEEE USA, vol. 1, no. 3, July 2004 (2004-07), pages 192-195, ISSN: 1545-598X**

## Description

The invention concerns a method and a device to determine a descriptor for images. The invention concerns also a device for retrieving images in a database and a device for classification of images in a database.

In various fields of signal and data processing, e.g. in multimedia asset management, small-sized, compact descriptors are calculated for images in order to compare two images or to search images in a database similar to a given image.

For instance, images in a database - e.g. personal photographs or images from a video - may have associated descriptors to ease database organization into groups of similar images and retrieval of images similar to a given one.

A problem of descriptors is that they should best reflect similarity of two images while being small-sized.

One type of known and commonly used descriptors is based on a frequency decomposition of the signal of the image. Therefore, a bank of filters is used to generate each a filtered signal corresponding to a frequency band. Then, often the power of the filtered signals in each band is calculated. The totality of power values builds the descriptor. The use of filter banks is common for example in audio processing. Also for images, filter banks such as wavelets or Gabor filter banks are widely used in image analysis and retrieval, so for instance in Jiang, J. et al., "Robust-to-rotation texture descriptor for image retrieval in wavelets domain" (Journal of Electronic Imaging, Vol. 15, No. 1, 2006).

In order to enhance the capacity of a descriptor to reflect the characteristics of images and the similarity of images, one of the following measures is commonly applied:

1. The number of filters in increased;
2. The repartition and type of filters is optimised;
3. The precision of each filter is increased.

The first measure can be realised for example by taking 12 instead of 8 filters. By this, the signal's frequency spectrum is better described.

The second measure can be realised - in the case of images - by replacing wavelet filters by Gabor filters. While wavelet filters cover the 2-dimensional frequency spectrum by considering horizontal, vertical and diagonal frequencies, Gabor filters are more flexible and can describe frequencies in more directions. Hereby, the images, and notably the texture in images, can be better described.

The third measure addresses the implementation of filters, notably digital filters, and can be realized by increasing the number of samples used to represent the filter kernel. For example, a Gabor filter can be enhanced when replacing a 16x16 kernel by a 32x32 kernel.

A problem of filter banks is often, that the spectrums of filters overlap and thus the frequency bands are not properly calculated. For example, Gabor filters have Gaussian-shaped spectra. These spectra do inherently overlap. This overlap lowers performance of image retrieval notably when one or several filters include considerable parts of frequency zero.

Let us take as an example two images showing stripes. Direction and frequency of stripes is identical in both images. The only difference is a spatially constant offset between both images. We calculate a descriptor for each image based on the power of Gabor subbands. Even if the images show the same type of texture, the descriptors will be the more different the higher the offset is.

Let us take another example of two images showing the same scene at different daytimes. The more different the illumination is the more different the descriptors will be. For example, images showing cars are searched in a database using a given image showing a car at daytime. Then, images showing cars at lower light levels such as in the evening may not be found.

This effect makes the performance of retrieval in databases more difficult, notably when semantically similar images are searched. For example, audio clips are searched having a similar rhythm to a given one. When audio clips have different signal offsets by technical reasons, some audio clips with same rhythm but different offset may not be found.

A negative effect can also occur when descriptors based on filter banks are used to classify images. Hereby, the descriptor is fed into a classifier that attributes one or several labels to the image. For example, a classifier for outdoor scenes in images can detect an outdoor scene in a given image and generate the label "outdoor" for this image. A classifier is usually trained by a set of typical images. When these images include only daylight images, the classifier may not detect outdoor scenes with lower light level, for example in the morning.

The invention proposes a method to calculate the descriptors of images by using bank filters and avoiding at least one of the above mentioned drawbacks.

To this end, the invention proposes a method and device to determine a descriptor for a signal representing an image as defined by the appended claims.

According to a second aspect, the invention concerns a device for retrieving images in a database. According to this aspect, the device comprises

- a device for determining a descriptor according to the invention,
- means for comparing descriptors of a sample image and descriptors of images of said database,
- means for retrieving images of said database which difference of descriptors with said sample image is lower than a predetermined threshold.

According to a third aspect, the invention concerns also a device for classification of images in a database. According to this third aspect, the device comprises also

- a device for determining a descriptor according to the invention,
- clustering means for classification of said descriptors.

Other characteristics and advantages of the invention will appear through the description of an embodiment of the invention, which will be illustrated, with the help of the enclosed drawing.

- Figure 1 represents a flow-chart of an embodiment of the invention,
- Figure 2 represents a device according to an embodiment of the invention,
- Figure 3 represents an application of the invention to the image retrieval,
- Figure 4 represents an embodiment of the invention to the classification of multimedia elements.

Embodiments of the present invention may be implemented in software, firmware, hardware or by any combination of various techniques. For example, in some embodiments, the present invention may be provided as a computer program product or software which may include a machine or computer-readable medium having stored thereon instructions which may be used to program a computer (or other electronic devices) to perform a process according to the present invention. In other embodiments, steps of the present invention might be performed by specific hardware component that contain hardwired logic for performing the steps, or by any combination of programmed computer components and custom hardware components.

Thus, a machine-readable medium may include any mechanism for storing or transmitting information in a form readable by a machine (for instance a computer). These mechanisms include, but are not limited to, floppy diskettes, optical disks, hard disk drives, holographic disks, compact disks read-only memory (CD-ROMs), magneto-optical disks, read-only memory (ROMs), random access memory (RAM), Erasable Programmable Read-only memory (EEPROM), magnetic or optical cards, flash memory, a transmission over the Internet, electrical, optical, acoustical or other forms of propagated signals (for instance carrier waves, infrared signals, digital signals, etc), or the like.

Unless specifically stated otherwise as apparent from the following discussion, it is appreciated that discussions utilizing terms such as "processing" or "computing" or "calculating" or "determining" or the like, may refer to the action and processes of a computer system, or similar electronic computing device, that manipulates and transforms data represented as physical quantities within the computer system memories or registers or other such information storage, transmission or display devices.

In the following detailed description of the embodiments, reference is made to the accompanying drawings that show, by way of illustration, specific embodiments in which the invention may be practices. In the drawings, like numeral describe substantially similar components throughout the several views. These embodiments are described in sufficient detail to enable those skilled in the art to practice the invention. Other embodiments may be utilized and structural, logical, and electrical changes may be made without departing from the scope of the present invention. Moreover, it is to be understood that the various embodiments of the invention, although different, are not necessarily mutually exclusive. For example, a particular feature, structure, or characteristic described in one embodiment may be included within other embodiments.

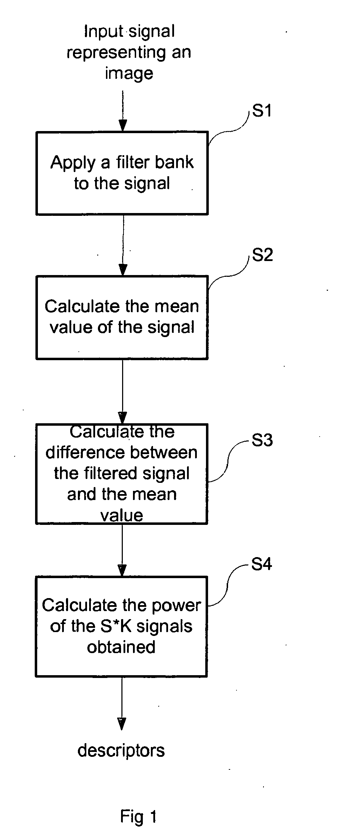

Figure 1 represents a flow-chart of an embodiment of the invention.

In a step S1, a filter bank is applied to the signal representing the image.

To capture the texture in images for database indexing and image retrieval, steered (or directional) filters are often used that express the degree of detail in several directions, for example vertically and horizontally. Among the steered filters, the Gabor filter is known for his good indexing efficiency.

According to the preferred embodiment described here, the filter bank is based on Gabor type filters. Other filters such as Hermite filters or general Gaussian filters may be used. A Gabor filter is defined according to the following formula:

$$g(x,y) = \frac{1}{2\pi\sigma_x\sigma_y}\exp\left[-\frac{1}{2}\left(\frac{x^2}{\sigma_x^2}+\frac{y^2}{\sigma_y^2}\right)+2\pi jWx\right]$$

$\sigma_x$ $\sigma_y$ are the standard deviations in x and y direction of the Gaussian kernel of the Gabor filter, Wx is a frequency shift in x direction and x, y represent the pixel coordinates.

The Fourier transform of this equation being:

$$G(u,v) = \exp\left[-\frac{1}{2}\left(\frac{(u-W)^2}{\sigma_u^2}+\frac{v^2}{\sigma_v^2}\right)\right]$$

With $\sigma_u = \dfrac{1}{2\pi\sigma_x}$ and $\sigma_v = \dfrac{1}{2\pi\sigma_y}$ and $W$ the central frequency of the filter.

The real part of the Gabor filter is

$$g_R(x,y) = \frac{1}{2\pi\sigma_x\sigma_y}\exp\left[-\frac{1}{2}\left(\frac{x^2}{\sigma_x^2}+\frac{y^2}{\sigma_y^2}\right)\right]\cos(2\pi Wx)$$

The Gabor filter bank is generated by

$$g_{mn}(x,y) = a^{-m}g(x',y') \text{ with } a>1 \text{ and } m,n = \text{integer.}$$

With m, n indicating a specific scale and a specific direction, respectively, with $x' = a^{-m}(x\cos\theta + y\sin\theta)$ and

$y' = a^{-m}(-x\sin\theta + y\cos\theta)$ where $\theta = \dfrac{n\pi}{K}$ and $K$ the total number of directions, with $0 \le n \le K$.

The scale is indicated by $m$ with $0 \le m < S$, $m=0$ being the base frequency band and S being the number of scales. The scale indicates the degree of detail focussed by the filter. For images, a low scale captures the overall image layout and a fine scale may capture grass and leaves.

The real part of the filter bank is

$$g_{Rmn}(x,y) = a^{-m}g_R(x',y')$$

According to this embodiment, $S = 4$, $K = 6$, $U_h = 0.4$, $U_l = 0.05$.
$U_h$ is the highest central frequency and $U_l$ the lowest one.
a is calculated according to the following formula:

$$a = \left(\frac{U_h}{U_l}\right)^{1/(S-1)} =$$

$$\sigma_u = \frac{(a-1)U_h}{(a+1)\sqrt{2\ln 2}} =$$

$$\sigma_v = \tan\left(\frac{\pi}{2K}\right)\left[U_h - 2(\ln 2)\frac{\sigma_u^2}{U_h}\right]\left[2(\ln 2) - \left(\frac{2(\ln 2)\sigma_u}{U_h}\right)^2\right]^{-1/2}$$

During step S1, the filter bank consisting of the real part of the Gabor filters is applied to the signal. One obtains S times K output signals one for each scale and for each direction.

In a step S2, K times S low-pass filters are applied to the input signal, in order to obtain a mean value of the signal in one of the K directions and according to one of the S scales.

The low pass filter applied is the following :

$$q(x,y) = \frac{1}{2\pi\sigma_x\sigma_y}\exp\left[-\frac{1}{2}\left(\frac{x^2}{(2\sigma_y)^2} + \frac{y^2}{\sigma_x^2}\right)\right]$$

And the bank of low pass filters applied is the following:

$$q_{mn}(x,y) = a^{-m}q(x',y') \text{ with } a > 1 \text{ and } m,n = \text{integer}$$

m and n correspond to those of the corresponding Gabor filter. This means, the mean filters have the same direction and the same scale as the Gabor filters. In a simpler variant, the scale may be kept constant, In this case, the finest scale has to be chosen, i.e $m = S - 1$.

In a variation of step S2, a set of directional filters is used that calculates the means along a line lying vertically to the direction of the sensitivity of the Gabor filters.

In a step S3, a descriptor is calculated for each signal.

For calculating the descriptor, a difference between the signal filtered by the Gabor filter bank and the signal calculated by the low-pass filter bank is calculated for each pixel of the image. S times K difference images are thus obtained.

In order to obtain the descriptor, the power in each of the S.K difference signals is evaluated in a step S4.

For this purpose, the power is estimated in quadratic image blocks containing several pixels by the average of the squares of the signal values. The descriptor contains in this case the power values of all blocks.

In combination, other statistical moments, centred or uncentred moments can be used.

To calculate the power values for a block, the S times K difference images are divided into 16 quadratic image blocks. In each block $k$ having $L$ pixels of each of the difference images, the image pixel values are squared, summarized and divided by the number of pixels per block according to the following equation

$$P_k = \frac{1}{L} \sum_{l=0}^{L-1} D_l^2$$

where $D$ is the difference value of a Pixel and $P$ is the resulting power value for a block.

The resulting descriptor $\{P_k \,/\, 0 \le k < 16SK\}$ has 16 times S times K coefficients.

According to another embodiment, one estimates one power value for the whole image.

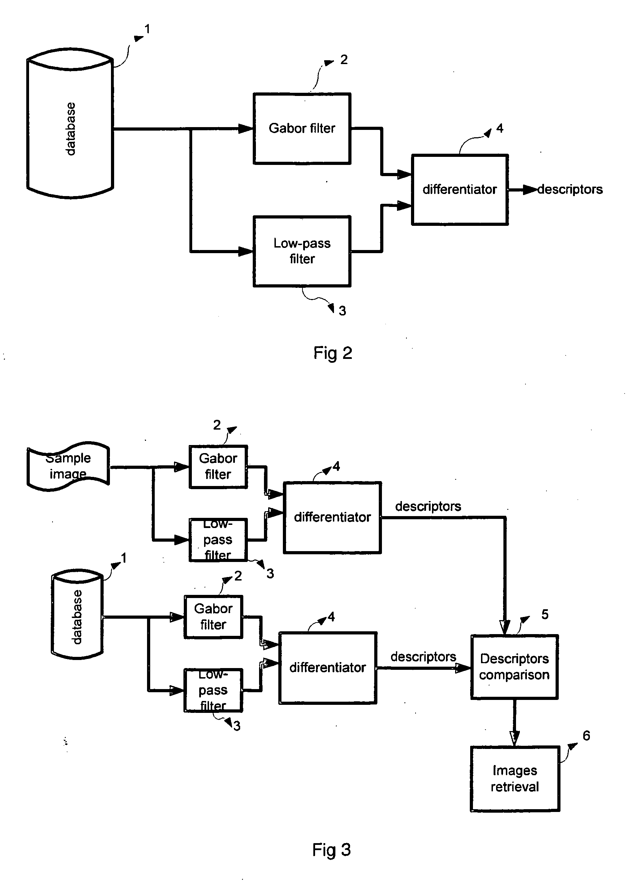

Figure 2 shows a device according to the preferred embodiment of the invention. This device implements preferentially a method according to the invention.

To this end, the device according to the preferred embodiment comprising a Gabor filter 2, a low-pass filter 3 and a differentiator 4 receives multimedia data from a database 1.

The Gabor filter 2 and the low-pass filter 3 receive as input the multimedia data of the database 1. They calculate for each of the image a set of K*S coefficients as described above in reference to figure 1. A differentiator 4 calculates the difference between the coefficients calculated by the Gabor filter and the coefficients calculated by the low-pass filter as explained in reference to figure 1.

A typical application can be the search of an image in the database 1 using a sample image as query as shown on figure 3. In this case, the coefficients are calculated for the sample image and for the images of the database. A module 5, receiving as input the descriptors of the sample image and the descriptors of the images of the database 1 calculates the difference between the descriptors obtained for the sample image and the descriptors of each of the image of the database or of a subset of the images of the database. The descriptors consisting in a set of S*K coefficients, the difference Di for each coefficient i is calculated by the module 5. Then, the following difference between the sample image and the given image is calculated:

$$D_{TOTAL} = \sum_{i=1}^{16SK} D_i^2$$

A number of images from the database having the smallest difference are returned to the user as closest images compared to the sample image by a module 6 of images retrieval. It can be the number of images having the difference lower than a predetermined threshold. Other difference formulas according to the state of the art of image retrieval can be used.

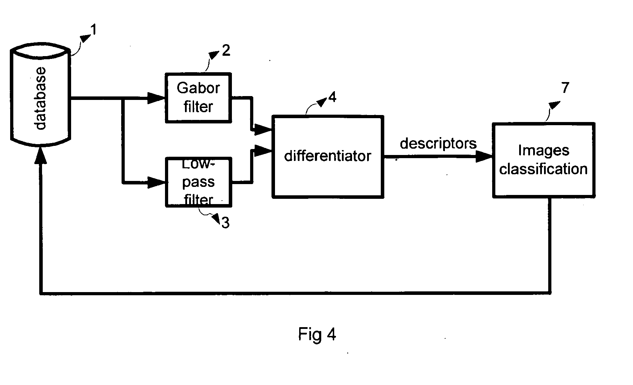

On figure 4, the module 4 as described on figure 3 is connected to a module 7 of images classification.

Such a module of image classification 7 establishes a classification of the images. The images are classified according to the value of their descriptors. Images having very close values of descriptors are classified as belonging to the same category. The classification can be a clustering method such as k-means using a given number of clusters.

**Claims**

1. Method to determine a descriptor for a signal representing an image comprising the step of applying (S1) to said signal a first bank of directional filters in order to obtain a first set of coefficients,
   **characterized in that** it comprises the steps of

   - applying (S2) to said signal a second bank of directional low-pass filters in order to obtain a second set of coefficients representing the low-pass filtered signal,
   - calculating (S3) a descriptor representing said image by
   - first obtaining the difference images between the images corresponding to said first set of coefficients and the images corresponding to said second set of coefficients and
   - secondly, obtaining said descriptor by calculating (S4) the associated power of said differences, said associated power being calculated on quadratic image blocks of said difference images by the average of the squares of the pixel values, said obtained descriptor being a set of values, each value corresponding to one image block in each difference image.

2. Method according to claim 1 **characterized in that** said directional filters are Gabor type filters.

3. Method according to claim 1 **characterized in that** said second bank of filters consist in low-pass filters.

**4.** Method according to claim 2 **characterized in that** said second bank of filters consist in directional filters which calculate the means along a line lying vertically to the direction of the sensitivity of the Gabor filters.

**5.** Method according to claim 1 or 2 **characterized in that** said calculation of associated power of said difference is done on the whole descriptors, said obtained descriptor being a unique value.

**6.** Method according to one of the previous claims **characterized in that** the coefficients in the first set and in the second set of coefficients correspond each to one direction and to one scale of the filter.

**7.** Device for determining a descriptor for a signal representing an image comprising

- means (2) for applying to said signal a first bank of directional filters in order to obtain a first set of coefficients,
- means (3) for applying to said signal a second bank of directional low-pass filters in order to obtain a second set of coefficients representing the means of said signal,
- means (4) for calculating a descriptor representing said image by
- first obtaining the difference images between the images corresponding to said first set of coefficients and the images corresponding to said second set of coefficients and calculating associated power of said difference.
- secondly, obtaining said descriptor by calculating the associated power of said differences, said associated power being calculated on quadratic image blocks of said difference images by the average of the squares of the pixel values, said obtained descriptor being a set of values, each value corresponding to one image block in each difference image.

**8.** Device for retrieving images in a database (1)**characterized in that** it comprises

- a device for determining a descriptor according to claim 7,
- means (5) for comparing descriptors of a sample image and descriptors of images of said database (1),
- means (6) for retrieving images of said database (1) which difference of descriptors with said sample image is lower than a predetermined threshold.

**9.** Device for classification of images in a database (1) **characterized in that** it comprises

- a device for determining a descriptor according to claim 7,
- clustering means (7) for classification of said descriptors.

**Patentansprüche**

**1.** Verfahren zur Bestimmung eines Deskriptors für ein Signal, das ein Bild darstellt, wobei das Verfahren den Schritt des Anwendens (S1) einer ersten Richtungsfilterbank auf das Signal umfasst, um eine erste Menge von Koeffizienten zu erhalten,
**dadurch gekennzeichnet, dass** das Verfahren die folgenden Schritte umfasst:

- Anwenden (S2) einer zweiten Richtungs-Tiefpassfilterbank auf das Signal, um eine zweite Menge von Koeffizienten zu erhalten, die das tiefpassgefilterte Signal darstellen,
- Berechnen (S3) eines Deskriptors, der das Bild darstellt, durch
- erstens, Erhalten der Differenzbilder zwischen den Bildern, die der ersten Menge von Koeffizienten entsprechen, und den Bildern, die der zweiten Menge von Koeffizienten entsprechen, und
- zweitens, Erhalten des Deskriptors durch Berechnen (S4) der zugeordneten Leistung der Differenzen, wobei die zugeordnete Leistung an quadratischen Bildblöcken der Differenzbilder durch den Mittelwert der Quadrate der Pixelwerte berechnet wird, wobei der erhaltene Deskriptor eine Menge von Werten ist, wobei jeder Wert einem Bildblock in jedem Differenzbild entspricht.

**2.** Verfahren nach Anspruch 1, **dadurch gekennzeichnet, dass** die Richtungsfilter Filter vom Gabor-Typ sind.

**3.** Verfahren nach Anspruch 1, **dadurch gekennzeichnet, dass** die zweite Filterbank aus Tiefpassfiltern besteht.

**4.** Verfahren nach Anspruch 2, **dadurch gekennzeichnet, dass** die zweite Filterbank aus Richtungsfiltern besteht, die den Mittelwert entlang einer Linie berechnen, die vertikal zur Richtung der Empfindlichkeit der Gabor-Filter liegt.

**5.** Verfahren nach Anspruch 1 oder 2, **dadurch gekennzeichnet, dass** die Berechnung der zugeordneten Leistung der Differenz an den gesamten Deskriptoren erfolgt, wobei der erhaltene Deskriptor ein eindeutiger Wert ist.

**6.** Verfahren nach einem der vorhergehenden Ansprüche,
**dadurch gekennzeichnet, dass** die Koeffizienten in der ersten Menge und in der zweiten Menge von Koeffizienten jeweils einer Richtung und einer Skale des Filters entsprechen.

**7.** Vorrichtung zur Bestimmung eines Deskriptors für ein Signal, das ein Bild darstellt, wobei die Vorrichtung umfasst:

- Mittel (2) zum Anwenden einer ersten Richtungsfilterbank auf das Signal, um eine erste Menge von Koeffizienten zu erhalten,
- Mittel (3) zum Anwenden einer zweiten Richtungs-Tiefpassfilterbank auf das Signal, um eine zweite Menge von Koeffizienten zu erhalten, die den Mittelwert des Signals darstellen,
- Mittel (4) zum Berechnen eines Deskriptors, der das Bild darstellt, durch
- erstens, Erhalten der Differenzbilder zwischen den Bildern, die der ersten Menge von Koeffizienten entsprechen, und den Bildern, die der zweiten Menge von Koeffizienten entsprechen, und Berechnen der zugeordneten Leistung der Differenz,
- zweitens, Erhalten des Deskriptors durch Berechnen der zugeordneten Leistung der Differenzen, wobei die zugeordnete Leistung an quadratischen Bildblöcken der Differenzbilder durch den Mittelwert der Quadrate der Pixelwerte berechnet wird, wobei der erhaltene Deskriptor eine Menge von Werten ist, wobei jeder Wert einem Bildblock in jedem Differenzbild entspricht.

**8.** Vorrichtung zum Wiedergewinnen von Bildern in einer Datenbank (1), **dadurch gekennzeichnet, dass** die Vorrichtung umfasst:

- eine Vorrichtung zum Bestimmen eines Deskriptors nach Anspruch 7,
- Mittel (5) zum Vergleichen von Deskriptoren eines Beispielbilds und Deskriptoren von Bildern der Datenbank (1),
- Mittel (6) zum Wiedergewinnen von Bildern aus der Datenbank (1), wobei die Differenz der Deskriptoren mit dem Beispielbild kleiner als ein vorgegebener Schwellenwert ist.

**9.** Vorrichtung zur Klassifizierung von Bildern in einer Datenbank (1), **dadurch gekennzeichnet, dass** die Vorrichtung umfasst:

- eine Vorrichtung zur Bestimmung eines Deskriptors nach Anspruch 7,
- Gruppierungsmittel (7) für die Klassifizierung der Deskriptoren.

**Revendications**

**1.** Procédé de détermination d'un descripteur de signal représentant une image, comprenant l'étape d'application (S1) sur ledit signal d'un premier banc de filtres directionnels afin d'obtenir un premier ensemble de coefficients, **caractérisé en ce qu'**il comprend les étapes suivantes :

- application (S2) sur ledit signal d'un deuxième banc de filtres passe-bas directionnels afin d'obtenir un deuxième ensemble de coefficients représentant le signal filtré passe-bas,
- calcul (S3) d'un descripteur représentant ladite image
- en obtenant tout d'abord les images de différence entre les images correspondant audit premier ensemble de coefficients et les images correspondant audit deuxième ensemble de coefficients et
- en obtenant ensuite ledit descripteur en calculant (S4) la puissance associée desdites différences, ladite puissance associée étant calculée sur des blocs d'image quadratiques desdites images de différence par la moyenne des carrés des valeurs de pixel, ledit descripteur obtenu étant un ensemble de valeurs, chaque valeur correspondant à un bloc d'image de chaque image de différence.

**2.** Procédé selon la revendication 1, **caractérisé en ce que** lesdits filtres directionnels sont des filtres de type Gabor.

**3.** Procédé selon la revendication 1, **caractérisé en ce que** ledit deuxième banc de filtres se compose de filtres passe-bas.

**4.** Procédé selon la revendication 2, **caractérisé en ce que** ledit deuxième banc de filtres se compose de filtres directionnels qui calculent le moyen le long d'une ligne verticale à la direction de la sensibilité des filtres Gabor.

**5.** Procédé selon la revendication 1 ou 2, **caractérisé en ce que** ledit calcul de la puissance associée de ladite différence est effectué sur la totalité des descripteurs, ledit descripteur obtenu étant une valeur unique.

**6.** Procédé selon une des revendications précédentes, **caractérisé en ce que** les coefficients du premier ensemble et du deuxième ensemble de coefficients correspondent chacun à une direction et à une échelle du filtre.

**7.** Dispositif de détermination d'un descripteur de signal représentant une image, comprenant

- un moyen (2) pour appliquer sur ledit signal un premier banc de filtres directionnels afin d'obtenir un premier ensemble de coefficients,
- un moyen (3) pour appliquer sur ledit signal un deuxième banc de filtres passe-bas directionnels afin d'obtenir un deuxième ensemble de coefficients représentant le moyen dudit signal,
- un moyen (4) pour calculer un descripteur représentant ladite image
- en obtenant tout d'abord les images de différence entre les images correspondant audit premier ensemble de coefficients et les images correspondant audit deuxième ensemble de coefficients et en calculant la puissance associée de ladite différence.
- en obtenant ensuite ledit descripteur en calculant la puissance associée desdites différences, ladite puissance associée étant calculée sur des blocs d'image quadratiques desdites images de différence par la moyenne des carrés des valeurs de pixel, ledit descripteur obtenu étant un ensemble de valeurs, chaque valeur correspondant à un bloc d'image de chaque image de différence.

**8.** Dispositif de récupération d'images dans une base de données (1), **caractérisé en ce qu'**il comprend

- un dispositif de détermination d'un descripteur selon la revendication 7,
- un moyen (5) pour comparer des descripteurs d'une image d'échantillon et des descripteurs d'images de ladite base de données (1),
- un moyen (6) pour récupérer des images de ladite base de données (1) dont la différence de descripteurs avec ladite image d'échantillon est inférieure à un seuil prédéterminé.

**9.** Dispositif de classification d'images dans une base de données (1), **caractérisé en ce qu'**il comprend

- un dispositif de détermination d'un descripteur selon la revendication 7,
- un moyen de regroupement (7) pour la classification desdits descripteurs.

Input signal
representing an
image

S1

Apply a filter bank
to the signal

S2

Calculate the mean
value of the signal

S3

Calculate the
difference between
the filtered signal
and the mean
value

S4

Calculate the power
of the S*K signals
obtained

descriptors

Fig 1

Fig 2

Fig 3

Fig 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Jiang, J. et al.** Robust-to-rotation texture descriptor for image retrieval in wavelets domain. *Journal of Electronic Imaging,* 2006, vol. 15 (1